(19) Europäisches Patentamt

European Patent Office

Office européen des brevets

(11) Veröffentlichungsnummer: **0 350 523 B1**

(12) # EUROPÄISCHE PATENTSCHRIFT

(45) Veröffentlichungstag der Patentschrift: **25.03.92**

(21) Anmeldenummer: **88111275.9**

(22) Anmeldetag: **14.07.88**

(51) Int. Cl.⁵: **A23L 2/06**, A23L 2/26

(54) Verfahren zur Herstellung eines Fruchtsaftgetränkes.

(43) Veröffentlichungstag der Anmeldung:
**17.01.90 Patentblatt 90/03**

(45) Bekanntmachung des Hinweises auf die
Patenterteilung:
**25.03.92 Patentblatt 92/13**

(84) Benannte Vertragsstaaten:
**AT BE CH DE ES FR GB IT LI LU NL SE**

(56) Entgegenhaltungen:
**EP-A- 0 198 591**
**EP-A- 0 227 174**
**EP-A- 0 244 903**
**DE-A- 3 221 509**

**Patent Abstracts of Japan, Band 9, Nr.**
**278(C-312)(2001), 06.11.1985; & JP-A-60 126**
**066 (Tadasu Sawabe) 05.07.1985**

(73) Patentinhaber: **Deutsche Granini GmbH & Co.
KG.
Kammerratsheide 31a Postfach 2023
W-4800 Bielefeld 1(DE)**

(72) Erfinder: **Fuchs, Günter Dr.
Fredenauer Strasse 35
W-4933 Blomberg(DE)**
Erfinder: **Szczecinski, Hans-Joachim Dr.
In der Loh 1
W-4503 Dissen(DE)**

(74) Vertreter: **Stracke, Alexander, Dipl.-Ing. et al
Jöllenbecker Strasse 164
W-4800 Bielefeld 1(DE)**

## Beschreibung

Die vorliegende Erfindung bezieht sich auf ein Verfahren zum Herstellen eines Fruchtsaftgetränkes, welches im wesentlichen frei ist von zugesetztem Protein und einen Fruchtsaftgehalt von mindestens 45 %, einen Zuckergehalt von etwa 8 % sowie einen Calciumgehalt von etwa 0,05 bis 0,26 Gew.-% und eine Säurekomponente aufweist, wobei als Calciumquelle Calciumcarbonat und die Säurekomponente zur Lösung des Calciumcarbonates dient.

Bei einem aus der EP-A-0244 903 bekannten Verfahren wird als Calciumquelle Calciumcarbonat verwendet, wobei jedoch zur Lösung des Calciumcarbonates eine Säurekomponente in Form einer synthetischen Säure verwendet wird. Das Calciumcarbonat wird direkt dem Konzentrat zugegeben. Da synthetische Stoffe jedoch vom Verbraucher nicht gewünscht werden, liegt der vorliegenden Erfindung die Aufgabe zugrunde, ein Verfahren gemäß dem Oberbegriff des Anspruches 1 anzugeben, bei dem für die Lösung des Calciumcarbonates auf synthetische Säuren verzichtet werden kann.

Die gestellte Aufgabe wird durch die Herstellung eines Premix I aus Wasser und Calciumcarbonat im Verhältnis von etwa 1:20 bis 1:50 gelöst, wobei das Calciumcarbonat durch Rühren in Bewegung gebracht und so ein Absetzen vermieden wird, sowie durch die Herstellung eines Premix II aus Fruchtsaftkonzentrat, Fruchtmark und gegebenenfalls Zitronensaftkonzentrat in einer solchen Menge, daß das fertige Fruchtsaftgetränk etwa 6,5 bis 8,5 g Säure pro Liter enthält, sowie durch anschließendes Zusammenführen von Premix I und Premix II unter Zugabe von Wasser sowie bedarfsweiser Zugabe von Zuckerlösung sowie weiterer Bestandteile.

Durch die Herstellung eines Premix I und eines Premix II können die entsprechenden Komponenten des fertigen Fruchtsaftgetränkes exakt bestimmt und somit genau eingestellt werden. Durch das Zusammenbringen von Premix I und Premix II unter Zugabe von Wasser sowie der bedarfsweisen Zugabe weiterer Bestandteile wird dann das fertige Fruchtsaftgetränk unter verrühren der beiden Komponenten fertiggestellt und kann dann abgefüllt werden.

Bei dem nach dem erfindungsgemäßen Verfahren hergestellten Fruchtsaftgetränk bedarf es zur Lösung des Calciumcarbonates keinerlei synthetischer Säuren, da das erforderliche Calciumcarbonat auch mit natürlichen Säuren gelöst werden kann. Hierbei ist die Verwendung von Zitronensaftkonzentrat oder die Zugabe von Zitronensaftkonzentrat möglich. Ebenso ist es denkbar, bei der Verwendung von Fruchtsaftkonzentraten mit hohem Anteil an entsprechenden, natürlichen Säuren auf die Zugabe von Zintronensaftkonzentrat zu verzichten. Ein derartiges Fruchtsaftgetränk entspricht hinsichtlich seiner Zusammensetzung dem Wunsch vieler Verbraucher, da es aus rein natürlichen bzw. naturreinen Bestandteilen besteht.

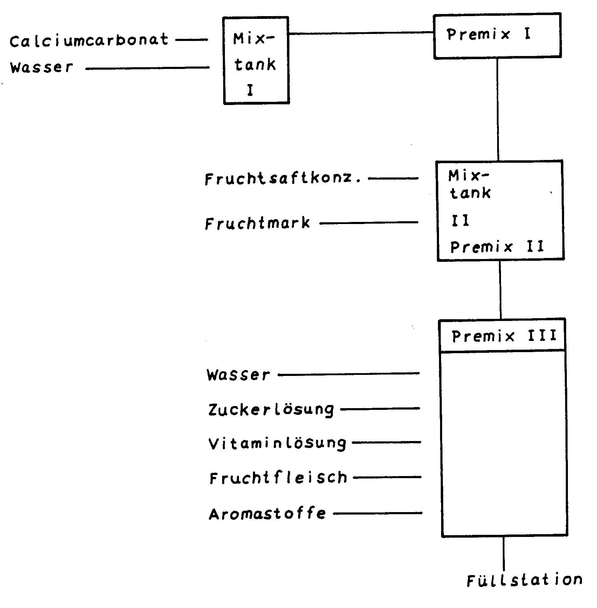

Die Erfindung wird im folgenden unter Bezugnahme auf die Zeichnung, die in schematischer Darstellung die einzelnen Verfahrensschritte zur Herstellung eines Fruchtsaftgetränkes zeigt näher beschrieben.

Zur Herstellung eines Fruchtsaftgetränkes, welches mit Calcium versetzt ist, im wesentlichen frei ist von zugesetztem Protein und einen Fruchtsaftgehalt von mindestens 45 %, einen Zuckergehalt von etwa 8 % sowie einen Calciumgehalt von etwa 0,05 bis 0,26 Gew.-% und eine Säurekomponente aufweist, wobei als Calciumquelle Calciumcarbonat dient und die Säurekomponente zur Lösung des Calciumcarbonates erforderlich ist, wird in einem Mixtank I ein Premix I hergestellt, und zwar aus Wasser und Calciumcarbonat. Das Calciumcarbonat wird in das Wasser eingeschlemmt und durch ständiges Rühren wird ein Absetzen des Calciumcarbonates verhindert.

In einem Mixtank II wird ein Premix II aus Fruchtsaftkonzentrat, Fruchtmark und ggfs. Zitronensaftkonzentrat hergestellt.

Anschließend werden Premix I und Premix II unter Zugabe von Wasser sowie der bedarfsweisen Zugabe von Zuckerlösung sowie weiterer Bestandteile, beispielsweise einer Vitaminlösung, Fruchtfleisch oder Aromastoffen, zusammengeführt. Diese Zusammenführung erfolgt unter gleichzeitigem Rühren und nach dem alle Bestandteile zusammengebracht sind, kann das so hergestellte Fruchtsaftgetränk in einer Füllstation abgefüllt werden.

Wesentlich ist, daß die zur Lösung des Calciumcarbonates erforderliche Säurekomponente ausschließlich aus natürlichen Säuren besteht. Dies kann entweder durch die Zugabe von Zitronensaftkonzentrat erfolgen, sofern das verwendete Fruchtsaftkonzentrat nicht genügend eigene natürliche Säure zur Lösung des Calciumcarbonates aufweist. Wird hingegen ein Fruchtsaftkonzentrat verwendet, welches einen sehr hohen natürlichen Anteil an Säuren aufweist, kann u.U. sogar auf den Zusatz von Zitronensaftkonzentrat verzichtet werden.

In jedem Falle ist die Gesamtrezeptur so abzustimmen, daß das Premix II hinsichtlich seines Säuregehaltes so eingestellt ist, daß hier ein gewisser Überschuß vorhanden ist in dem Sinne, daß das Calciumcarbonat des Premix I gelöst werden kann und daß dennoch das fertige Fruchtsaftgetränk den gewünschten, für den Geschmack mitbestimmenden Säureanteil aufweist.

Bei der Herstellung des Premix I beträgt das Verhältnis Calciumcarbonat zu Wasser etwa 1 : 20 bis 1 : 50.

Vorzugsweise wird die Menge des Calciumcarbonates so bemessen, daß in 0,2 l des fertigen Fruchtsaftgetränkes etwa ein Drittel des Tagesbedarfes eines Menschen an Calcium enthalten ist.

Bei der Herstellung des Premix II wird ggfs. so viel Zitronensaftkonzentrat zugegeben, daß das fertige Fruchtsaftgetränk noch 6,5 bis 8,5 g Säure/l enthält.

Die Entgasung des beim Zusammenführen von Premix I und Premix II freiwerdenden Kohlendioxydes erfolgt vor und während der Zugabe von weiteren Bestandteilen mittels Rühren. Man erhält dann ein wie gewünscht nicht musierendes Getränk.

## Patentansprüche

1. Verfahren zum Herstellen eines Fruchtsaftgetränkes, welches im wesentlichen frei ist von zugesetztem Protein und einen Fruchtsaftgehalt von mindestens 45 %, einen Zuckergehalt von etwa 8 % sowie einen Calciumgehalt von etwa 0,05 bis 0,26 Gew.-% und eine Säurekomponente aufweist, wobei als Calciumquelle Calciumcarbonat und die Säurekomponente zur Lösung des Calciumcarbonates dient, **gekennzeichnet durch** die Herstellung eines Premix I aus Wasser und Calciumcarbonat im Verhältnis von etwa 1:20 bis 1:50, wobei das Calciumcarbonat durch Rühren in Bewegung gebracht und so ein Absetzen vermieden wird und durch die Herstellung eines Premix II aus Fruchtsaftkonzentrat, Fruchtmark und gegebenenfalls Zitronensaftkonzentrat in einer solchen Menge, daß das fertige Fruchtsaftgetränk etwa 6,5 bis 8,5 g Säure pro Liter enthält, sowie durch anschließendes Zusammenführen von Premix I und Premix II unter Zugabe von Wasser sowie bedarfsweise Zugabe von Zuckerlösung sowie weiterer Bestandteile.

2. Verfahren nach Anspruch 4, dadurch gekennzeichnet, daß die Menge des Calciumcarbonates so bemessen ist, daß in 0,2 l des fertigen Fruchtsaftgetränkes etwa ein Drittel des Tagesbedarfes eines Menschen an Calcium enthalten ist.

## Claims

1. Process for the production of a fruit juice drink, which is substantially free of added protein and has a fruit juice content of at least 45%, a sugar content of about 8% as well as a calcium content of about 0.05 to 0.26 weight percent and an acid component, wherein calcium carbonate serves as calcium source and the acid component for dissoultion of the calcium carbonate, characterised by the production of a premix of water and calcium carbonate in the ratio of about 1:20 to 1:50, wherein the calcium carbonate is brought into movement by stirring and thus settling is avoided and by the production of a premix II of fruit juice concentrate, fruit pulp and in a given case lemon juice concentrate in such an amount that the prepared fruit juice drink contains about 6.5 to 8.5 grams of acid per litre, as well as by subsequent combining of premix I and premix II with admetering of water and, as needed, admetering of sugar solution as well as further ingredients.

2. Process according to claim 2, characterised thereby that the amount of the calcium carbonate is so dimensioned that about one third of a person's daily calcium requirement is contained in 0.2 litres of the prepared fruit juice drink.

## Revendications

1. Procédé de préparation d'une boisson à base de jus de fruits, essentiellement exempte de protéine ajoutée et qui comprend une teneur en jus de fruits d'au moins 45 %, une teneur en sucre d'environ 8 % ainsi qu'une teneur en calcium d'environ 0,05 à 0,26 % en poids et un composant acide, procédé dans lequel le carbonate de calcium sert comme source de calcium et le composant acide sert pour la dissolution du carbonate de calcium, procédé caractérisé

   - par la préparation d'un prémélange I d'eau et de carbonate de calcium dans la proportion d'environ 1:20 à 1:50, le carbonate de calcium étant mis en mouvement par agitation, en évitant ainsi une sédimentation et

   - par la préparation d'un prémélange II en concentré de jus de fruits, en pulpe de fruits et éventuellement en concentré de jus de citron en une quantité telle que la boisson à base de jus de fruits terminé contienne environ 6,5 à 8,5 g d'acides par litre, ainsi que

   - par la réunion successive du prémélange I et du prémélange II avec addition d'eau ainsi qu'à la demande avec addition d'une solution sucrée et d'autres composants.

2. Procédé selon la revendication I, caractérisé en ce que la quantité du carbonate de calcium est dosée pour que dans 0,2 1 de la boisson à base de jus de fruits terminée, environ un tiers du besoin journalier en calcium d'une personne soit contenu.

Calciumcarbonat ——— | Mix-tank I |

Wasser ——————— | Mix-tank I |

| Premix I |

Fruchtsaftkonz. ——— | Mix-tank II  Premix II |

Fruchtmark ————— | Mix-tank II  Premix II |

| Premix III |

Wasser —————

Zuckerlösung ———

Vitaminlösung ———

Fruchtfleisch ——

Aromastoffe ———

Füllstation